# EUROPÄISCHE PATENTANMELDUNG

(11) **EP 4 304 061 A1**
(43) Veröffentlichungstag der Anmeldung: **10.01.2024**
(21) Anmeldenummer: 22182976.5
(22) Anmeldetag: 05.07.2022
(51) Int. Cl.: H02K 11/33, H02K 3/04, H02K 9/22

(54) **ELEKTROMOTOR**

(71) Anmelder: Siemens Aktiengesellschaft, 80333 München (DE)
(72) Erfinder: Brütting, Frank, 91054 Erlangen (DE)
(74) Vertreter: Siemens Patent Attorneys

(57) **Zusammenfassung**

Ein Elektromotor mit ständerseitigen Stabwicklungen umfasst eine Mehrzahl von Wechselrichtern zur Ansteuerung der Stäbe, wobei die Leistungsteile der Wechselrichter auf einer oder mehreren Leiterplatten angeordnet sind, die Leiterplatten wenigstens eine kreis- oder ringförmige Struktur ausbilden, wobei die Leiterplatten mittels einer Verbindungsplatine elektrisch verbunden sind, wobei die Verbindungsplatine ringförmig ist und auf die Leiterplatten aufgesteckt ist.

## Beschreibung

Die Erfindung betrifft einen Elektromotor mit einer ständerseitigen Stabwicklung.

Elektromotoren können ständerseitig eine Stabwicklung aufweisen. Dabei weist der Ständer (Stator) eine Reihe von Stäben anstelle von gewickelten Drahtleitern als Feldleiter auf. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Dieser hohe Stromfluss erfordert aber durch die geringe Induktivität der Stäbe nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Komponenten der Leistungselektronik beispielsweise auf einer oder mehr Platinen angeordnet werden, die nahe am Elektromotor angeordnet werden.

Besonders vorteilhaft ist, dass ein solcher Elektromotor in kompakter Weise so gestaltet werden kann, dass jeder der Feldleiter von eigenen Leistungsteilen angesteuert wird und somit jeder Feldleiter mit einer eigenen Phase angesteuert werden kann. So können Elektromotoren mit 48, 72 oder auch 120 Feldleitern und Phasen kompakt aufgebaut werden.

Problematisch ist dabei, dass die große Zahl von Leistungsteilen mit einer zentralen Steuerung verbunden werden muss. Kabelverbindungen zwischen einer zentralen Steuerung und einer Vielzahl von Leistungsteilen ergeben nachteilig einen sehr komplexen Aufbau.

Es ist Aufgabe der Erfindung, einen Elektromotor anzugeben, der den eingangs genannten Nachteil behebt, insbesondere eine effiziente Verbindung zwischen Steuerung und Leistungsteilen aufweist.

Diese Aufgabe wird durch einen Elektromotor mit den in Anspruch 1 angegebenen Merkmalen gelöst.

Der erfindungsgemäße Elektromotor umfasst einen Stator mit einer Mehrzahl von als Stab ausgestalteten Feldleitern. Weiterhin umfasst der Elektromotor einen Wechselrichter mit einem oder mehreren parallelen Leistungsteilen für jeden der Feldleiter zu deren Ansteuerung, wobei der Wechselrichter eine Steuerung zur Erzeugung von Ansteuersignalen für die Leistungsteile umfasst.

Dabei sind die Endstufen des Wechselrichters auf einer Mehrzahl von Leiterplatten angeordnet. Die Leiterplatten wiederum sind so angeordnet, dass sie wenigstens eine kreis- oder ringförmige Struktur ausbilden.

An jeder der Leiterplatten sind ein oder mehrere Steckverbinder angeordnet zur Kontaktierung der Endstufen. Eine Verbindungsplatine ist an die Steckverbinder von wenigstens zwei der Leiterplatten von einer der kreis- oder ringförmigen Strukturen angesteckt.

Da die kreis- oder ringförmigen Strukturen aus einer Mehrzahl von Leiterplatten aufgebaut sind, versteht es sich, dass sie nicht geometrisch exakt sind und die Kreis- oder Ringfläche auch nicht vollständig gefüllt sein muss. Vielmehr verbleiben Lücken zwischen den Leiterplatten.

Die Steckverbinder können beispielsweise Federkontakte sein oder direkte Platinen-Steckverbinder. Es kann sich dabei um eine Buchse oder einen (Einbau-)Stecker oder einen Schraubkontakt handeln, wobei die entsprechende Gegenseite an der Verbindungsplatine angeordnet ist.

Unter Endstufe werden im Rahmen dieses Textes im Wesentlichen die Leistungshalbleiterschalter verstanden, die zu einem Wechselspannungsausgang gehören. Da die zu den Leistungshalbleiterschaltern gehörigen Gate-Treiber-Schaltungen in einigen Ausgestaltungen der Erfindung örtlich von den Leistungshalbleiterschaltern getrennt sind, werden diese nicht zur Endstufe gezählt. Unter Leistungsteil werden die Leistungshalbleiterschalter zusammen mit ihren jeweiligen Gate-Treiber-Schaltungen verstanden. Die Gesamtheit aus Leistungsteilen und Steuerung wird als Wechselrichter bezeichnet.

Vorteilhaft wird durch die Erfindung eine besonders einfache Art der Kontaktierung der elektronischen Bauelemente auf den Leiterplatten erreicht, bei der eine Vielzahl von Kabeln zwischen der Steuerung und den Leiterplatten durch eine einzelne Verbindungsplatine pro kreis- oder ringförmiger Struktur ersetzt wird. Hat ein solcher Elektromotor beispielsweise 72 Phasen, also 72 Feldleiter und werden je drei dieser Feldleiter von einer Leiterplatte angesteuert, dann umfasst jede kreis- oder ringförmige Struktur 24 Leiterplatten. An die Stelle von 24 Kabeln zur Steuerung tritt dann die Verbindungsplatine, die zweckmäßig an die Steckverbinder aller Leiterplatten angeschlossen ist. Diese kann mit einem einzigen Kabel mit der Steuerung verbunden werden.

Es ist zweckmäßig, wenn für jede kreis- oder ringförmige Struktur eine Verbindungsplatine vorhanden ist, insbesondere genau eine Verbindungsplatine.

Die Verbindungsplatinen stellen vorteilhaft eine indirekte Verbindung zwischen der Steuerung einerseits und den Endstufen, also den Leistungshalbleiterschaltern, auf den Leiterplatten andererseits her. Indirekt bedeutet dabei, dass inmitten dieser Verbindung die Gate-Treiber-Schaltungen für die Leistungshalbleiterschaltern liegen. Die Gate-Treiber-Schaltungen können auf verschiedene Weise angeordnet sein.

Vorteilhafte Ausgestaltungen des erfindungsgemäßen Elektromotors gehen aus den abhängigen Ansprüchen hervor. Dabei kann die Ausführungsform der unabhängigen Ansprüche mit den Merkmalen eines der Unteransprüche oder mit denen aus mehreren Unteransprüchen kombiniert werden. Demgemäß können noch zusätzlich folgende Merkmale vorgesehen werden:
Die Verbindungsplatine ist bevorzugt kreis- oder ringförmig. Die Ringform lässt bei der Verbindungsplatine ebenso wie bei den ringförmigen Strukturen eine Aussparung in der Mitte, durch die eine Luftkühlung realisiert werden kann.

Die Verbindungsplatine ist bevorzugt an die Steckverbinder aller Leiterplatten einer jeweiligen kreis- oder ringförmigen Struktur angesteckt. Sie verbindet dann alle Leiterplatten der kreis- oder ringförmigen Struktur mit der Steuerung und vermindert bestmöglich die Anzahl an nötigen Kabelverbindungen.

In einer alternativen Ausgestaltung ist die Verbindungsplatine ringsektorförmig. Mit anderen Worten bildet die Verbindungsplatine nur einen Ringausschnitt. In diesem Fall ist sie auch nur an einen Teil der Leiterplatten einer kreis- oder ringförmigen Struktur angesteckt. Sie ist dabei zweckmäßig so gestaltet, dass eine Mehrzahl von gleichartigen Verbindungsplatinen den gesamten Ring so abdecken, dass alle Leiterplatten an eine der Verbindungsplatinen angesteckt sind. Bei kleineren Elektromotoren kann der Mittelpunktswinkel zweckmäßig in etwa 180°, 120° oder 90° sein, womit dann 2, 3 oder 4 Verbindungsplatinen für die Kontaktierung aller Leiterplatten einer kreis- oder ringförmigen Struktur benötigt werden. Bei großen Elektromotoren mit vielen Phasen kann der Durchmesser der kreis- oder ringförmigen Strukturen im Meterbereich liegen. In diesem Fall kann es zweckmäßig sein, wesentlich geringere Mittelpunktswinkel zu verwenden, da ansonsten die Verbindungsplatinen zu groß würden. In diesem Fall können die Verbindungsplatinen so gestaltet sein, dass sie beispielsweise zwei, drei oder vier der Leiterplatten kontaktieren. Bei einem Elektromotor mit 120 Phasen, bei dem die Verbindungsplatine drei der Leiterplatten kontaktiert, beträgt der Mittelpunktswinkel nur ca. 9°. Bei solchen Verbindungsplatinen ist die Krümmung des Umfangs gering und anstelle einer ringsektorförmigen Verbindungsplatine kann auch eine rechteckige Platine verwendet werden. Da es vorteilhaft ist, wenn die Leiterplatten alle gleichartig gestaltet sind, ist es zweckmäßig, wenn die Platzierung der Steckverbinder trotzdem einer ringartigen Anordnung entspricht.

Es versteht sich, dass die Angaben zum Mittelpunktswinkel nicht exakt sein müssen. Die tatsächlichen Mittelpunktswinkel können insbesondere etwas kleiner sein, da damit etwas Platz zwischen den Verbindungsplatinen verbleibt und trotzdem alle Leiterplatten kontaktiert werden können. Solche Verbindungsplatinen bewirken zwar eine erhöhte Anzahl von Kabeln zur Steuerung gegenüber einer ringförmigen Verbindungsplatine, sind aber wesentlich leichter anzubringen und zu entfernen, vor allem, wenn der Elektromotor eine Mehrzahl von beidseitig mit Leiterplatten belegten Kühlplatten umfasst.

Die Anzahl der Verbindungsplatinen entspricht bevorzugt der Anzahl der kreis- oder ringförmigen Strukturen. Wenn die Leiterplatten also zwei oder mehr kreis- oder ringförmigen Strukturen ausbilden, dann ist bevorzugt für jede der kreis- oder ringförmigen Strukturen eine Verbindungsplatine an die Steckverbinder von wenigstens zwei Leiterplatten jeder der kreis- oder ringförmigen Strukturen angesteckt.

In bestimmten Ausführungsformen ist die Verbindungsplatine mit einer Mehrzahl von Leiterplatten von zwei verschiedenen kreis- oder ringförmigen Strukturen verbunden, wobei diese Strukturen dann zweckmäßig auf zwei benachbarten Kühlplatten auf einander zugewandten Seiten angeordnet sind. Dabei ist die Verbindungsplatine an die Leiterplatten einer der beiden kreis- oder ringförmigen Strukturen angesteckt mittels Steckverbindern. Die Verbindungsplatine kann weiterhin auch an die Leiterplatten der anderen kreis- oder ringförmigen Struktur mittels Steckverbinder angesteckt sein. Alternativ kann die Verbindung hierbei aber auch mittels Kabelverbindungen realisiert sein, um zu einer der beiden kreis- oder ringförmigen Strukturen einen flexibleren Abstand wahren zu können und den Einbau zu vereinfachen. Diese Ausgestaltung ist kombinierbar mit anderen Ausführungsformen. Beispielsweise können zwei konzentrische und koplanare Verbindungsplatinen vorhanden sein und an die Leiterplatten zweier einander zugewandter kreis- oder ringförmiger Strukturen angesteckt sein, um Redundanz bei der Ansteuerung zu haben. Auch kann es sich bei den Verbindungsplatinen um vollständige Ringe oder ringsektorförmige Verbindungsplatinen handeln oder um solche mit einer anderen Form.

Auch wenn die Verbindungsplatinen vollständig ringförmig sind, kann der Elektromotor für jede der kreis- oder ringförmigen Strukturen zwei oder mehr der Verbindungsplatinen umfassen. Diese können beispielsweise unterschiedliche Radien aufweisen und somit konzentrisch und koplanar auf die kreis- oder ringförmige Struktur aufgesteckt werden.

Eine analoge Ausgestaltu+ng ist auch möglich, wenn die Verbindungsplatinen nur ringsektorförmig sind. Auch in diesem Fall können Verbindungsplatinen mit verschiedenen Radien konzentrisch und koplanar auf die kreis- oder ringförmige Struktur aufgesteckt werden und so zwei lückenhafte Ringe ausbilden.

In beiden genannten Fällen können die Verbindungsplatinen und Leiterplatten so ausgestaltet sein, dass jede der Leiterplatten an genau eine der Verbindungsplatinen angesteckt ist. In diesem Fall kann beispielsweise ein innerer Ring jede zweite der Leiterplatten oder jede zweite der Phasen kontaktieren und ein äußerer Ring die verbleibenden Leiterplatten oder Phasen. Die Verbindungsplatinen überdecken in diesem Fall also alle Leiterplatten, kontaktieren davon aber jeweils nur jede zweite.

Sie können auch so ausgestaltet sein, dass jede der Leiterplatten an zwei oder mehr Verbindungsplatinen angesteckt ist. In diesem kontaktieren die Verbindungsplatinen also alle überdeckten Leiterplatten. Dadurch kann eine Redundanz geschaffen werden und der Ausfall vom gesamten Motor oder einem großen Anteil bei Ausfall einer Verbindungsplatine kann vermieden werden.

Die Zentral-Achse der kreis- oder ringförmigen Struktur oder Strukturen kann der Motorachse entsprechen. Das bedeutet mit anderen Worten, dass das Zentrum jeder kreis- oder ringförmigen Struktur auf der Motorachse liegt und dass jede der kreis- oder ringförmigen Strukturen senkrecht zur Motorachse angeordnet ist.

Weist der Elektromotor mehrere kreis- oder ringförmige Strukturen auf, dann sind diese bevorzugt parallel zueinander und axial versetzt zueinander angeordnet, sodass ihre Mittelpunkte auf einer gemeinsamen Zentral-Achse liegen.

Die Verbindungsplatine ist bevorzugt parallel zur angesteckten kreis- oder ringförmigen Struktur angeordnet, also senkrecht zur Zentral-Achse, insbesondere senkrecht zur Motorachse.

Bei dieser Form der Anordnung der kreis- oder ringförmigen Strukturen durchdringen die Feldleiter oder sie fortsetzende Stromleiter bei geradliniger Fortsetzung die kreis- oder ringförmigen Strukturen in einer drehsymmetrischen Weise. Dadurch ergibt sich ein gut modularisierbarer Aufbau, bei dem gleichartige Platinen verwendet werden können und bei dem die Kontaktierung eines jeweiligen Feldleiters besonders einfach ist.

Weiterhin können die Feldleiter oder sie fortsetzende Stromleiter sogar als mechanischer Träger für die Platinen fungieren, wodurch der Aufbau weiter vereinfacht wird.

Die Verbindungsplatine kann Gate-Treiber-Schaltungen für die Leistungsteile umfassen. Dadurch wird erreicht, dass die Gate-Treiber-Schaltungen nicht mehr eigenen Platz auf den Platinen beanspruchen. Für die Leistungsteile bleibt entsprechend mehr Platz auf den Platinen, was das Design der Platinen vereinfacht. Weiterhin wird auch anfallende Abwärme der Gate-Treiber-Schaltungen von den Platinen entfernt und somit die Entwärmung vereinfacht.

Weiterhin kann die Verbindungsplatine auch einen oder mehrere lokale Steuerchips umfassen, die Steuerungsaufgaben, beispielsweise eine Strommessung für eine jeweilige Endstufe übernehmen. Die lokalen Steuerchips sind jeweils einer oder mehreren Gate-Treiber-Schaltungen zugeordnet und mit dieser oder diesen verbunden.

Alternativ können die Gate-Treiber-Schaltungen auf den Platinen selbst zusammen mit den jeweiligen Leistungshalbleiterschaltern angeordnet sein. Dadurch werden die Verbindungsplatinen einfacher im Aufbau, da sie lediglich eine Verbindung zwischen der Steuerung und den Platinen und damit den Gate-Treiber-Schaltungen herstellen müssen. Hierfür können die Verbindungsplatinen vorteilhaft einen Multiplexer umfassen.

In einer weiteren Alternative können die Gate-Treiber-Schaltungen auch auf eigenen Treiber-Platinen angeordnet sein. Diese werden bevorzugt auf die Platinen mit den Leistungshalbleiterschaltern aufgesteckt, wobei die Anordnung der Platinen in diesem Fall sandwichartig ist, d.h. die Treiber-Platinen überdecken die Platinen wenigstens teilweise. In diesem Fall können die Verbindungsplatinen an den Treiber-Platinen oder an den Leiterplatten angesteckt sein, d.h. mit einer der Platinentypen eine Verbindung aufweisen, über die Signale übertragen werden.

Jede Phase, die auf einer Platine angesteuert wird, weist dazu eine Halbbrücke auf, die aus zwei logischen Schaltern aufgebaut ist. Ein logischer Schalter kann dabei genau einen einzelnen Leistungshalbleiterschalter umfassen. Um das Schalten höherer Ströme zu erlauben, kann ein logischer Schalter aber auch eine Mehrzahl von Leistungshalbleiterschaltern umfassen, beispielsweise zwei, drei, fünf oder noch mehr Leistungshalbleiterschalter, die parallel geschaltet sind.

Eine Gate-Treiber-Schaltung ist bevorzugt so gestaltet, dass sie die Steuer-Anschlüsse (beispielsweise Gate-Anschlüsse) der beiden logischen Schalter der Halbbrücke ansteuert, d.h. mit Strom/Spannung in der Weise versorgt, dass die von der Steuerung geforderten Schalthandlungen stattfinden und die Schalter in einer von der Steuerung geforderten Weise eingeschaltet und ausgeschaltet sind.

Umfassen die logischen Schalter der Halbbrücke jeweils mehr als einen parallelen Leistungshalbleiterschalter, dann kann die Gate-Treiber-Schaltung ausgestaltet sein, alle der Leistungshalbleiterschalter anzusteuern. Es ist aber auch möglich, mehr als eine Gate-Treiber-Schaltung für die Ansteuerung vorzusehen. Beispielsweise kann die Anzahl der Gate-Treiber-Schaltungen genau der Anzahl der parallelen Leistungshalbleiterschalter entsprechen. Umfasst die Halbbrücke also fünf Highside-MOSFETs und fünf Lowside-MOSFETs, können dafür bis zu zehn Gate-Treiber-Schaltungen vorhanden sein. In diesem Fall ist es aus Platzgründen vorteilhaft, die Gate-Treiber-Schaltungen auf der Treiber-Platine oder auf der Verbindungsplatine anzuordnen.

Die Verbindungsplatine kann einen Multiplexer und weitere zusätzliche Schaltkreise wie beispielsweise Überwachungs-, Ansteuer-, Verstärker/Pufferschaltungen oder Kommunikationsschnittstellen umfassen und derart ausgestaltet sein, dass ein von der Steuerung auf einer ersten Signalleitung eingehendes Steuersignal für ein erstes Leistungsteil mit dem Multiplexer auf eine von mehreren zweiten Signalleitungen geleitet wird, die mit dem ersten Leistungsteil über beispielsweise einen Federkontakt verbunden ist.

Durch den Multiplexer auf der Verbindungsplatine wird erreicht, dass die Steuerung nur mit einer einzelnen Signalleitung an die Verbindungsplatine angeschlossen sein muss, was den Aufbau vereinfacht. Das ist besonders vorteilhaft, wenn die Verbindungsplatine mehrere Leistungsteile auf einer einzelnen Platine sowie eine Mehrzahl von parallel geschalteten Leistungsteilen mit der Steuerung verbindet, da in diesem Fall ohne den Multiplexer eine große Anzahl paralleler Steuerleitungen von der Steuerung zur Verbindungsplatine nötig wären. Die einzelne Signalleitung kann dabei eine direkte elektrische Leitung sein oder aber auch eine nach einem Kommunikations-Standard arbeitende Verbindung wie beispielsweise eine USB-Verbindung, eine LAN-Verbindung, eine optische Verbindung oder eine Schraub-Verbindung.

Die Verbindungsplatine kann eine oder mehrere Verschraubungen mit einer oder mehreren der kreis- oder ringförmigen Strukturen umfassen. Durch Verschraubungen wird verhindert, dass sich die Verbindungsplatine durch Vibrationen und andere äußere Umstände löst.

Die Verbindungsplatine kann eine flexible Leiterplatte sein. Flexible Leiterplatten können sich bei mechanischer Beanspruchung verformen. Leiterbahnen und andere elektronische Bauelemente auf solchen Leiterplatten behalten dabei ihre elektrische Funktion.

Die Stromleiter können so gestaltet sein, dass sie die Feldleiter axial verlängern. Die Stromleiter sind dabei ähnlich wie die Feldleiter des Elektromotors gestaltet, können aber beispielsweise eine abweichende Querschnittsform aufweisen. Beispielsweise können die Stromleiter einen runden Querschnitt haben, während die Feldleiter einen langgestreckt rechteckigen Querschnitt aufweisen. Es ist zweckmäßig, wenn die Stromleiter wenigstens denselben Strom tragen können wie die Feldleiter. Stromleiter und Feldleiter können über dafür ausgestaltete Schuhe verbunden sein, die eine mechanische und elektrische Verbindung gewährleisten.

Die Leiterplatten können auf wenigstens einer Kühlplatte angeordnet sein. Die Kühlplatte kann dabei beidseitig mit den Platinen belegt sein, um eine große Dichte der elektrischen Bauteile zu erreichen. Die Kühlplatte ist bevorzugt eine metallische im Wesentlichen kreis- oder ringförmige Platte. Die Kühlplatte kann dabei zur Entwärmung Wärmerohre aufweisen oder Kühlkanäle für eine Durchströmung mit Luft. Die Kühlplatte kann auch aus zwei ringförmigen parallel angeordneten Platten aufgebaut sein, die miteinander so verschraubt sind, dass ein Abstand zwischen ihnen verbleibt. Eine aktive Belüftung kann dann so angeordnet sein, dass Luft zwischen den Platten angesaugt wird.

Die Kühlplatte kann so angeordnet sein, dass die Feldleiter oder mit den Feldleitern elektrisch verbundene Stromleiter mit der Kühlplatte in mechanischer Wirkverbindung stehen. Beispielsweise können die Stromleiter oder Feldleiter als mechanischer Träger für die Kühlplatte ausgebildet sein. Dafür ist die Kühlplatte bevorzugt senkrecht zur Achse der elektrischen Maschine angeordnet. Auf diese Weise kann die Kühlplatte mit den Leiterplatten platzsparend an einem axialen Ende der elektrischen Maschine angeordnet werden.

Die Leiterplatten können kreis- oder ringsektorförmig ausgestaltet sein. Leiterplatten mit dieser Form lassen sich besonders gut zu einem Kreis oder Ring zusammensetzen und somit optimal an die Form der elektrischen Maschine angepasst an einem axialen Ende der Maschine anordnen, wobei gleichzeitig eine hohe Modularität erreicht wird.

Die Leistungsteile sind bevorzugt ausgestaltet zur Erzeugung einer Wechselspannung mit einer Amplitude von 200 V oder weniger, insbesondere 100 V oder weniger, insbesondere 50 V oder weniger. Dadurch wird erst ermöglicht, dass die Komponenten der Leistungselektronik, insbesondere die Leistungshalbleiterschalter in geringen Abständen im MillimeterBereich voneinander angeordnet werden können und somit eine erhebliche Zahl von Leistungshalbleiterschaltern auf verhältnismäßig geringem Raum angeordnet werden können. Dadurch ist es möglich, hohe Ströme bei nicht zu großem Platzbedarf bereitzustellen und gleichzeitig eine Vielzahl von Phasen, beispielsweise 6, 12, 24, 48, 72 oder sogar 120 Phasen zu erzeugen.

Die Feldleiter, die als Stäbe ausgestaltet sind, können massive Stäbe, beispielsweise aus Kupfer sein, können aber in anderen Ausgestaltungen des Elektromotors auch Unterteilungen in Längsrichtung aufweisen oder als Leiterbündel aufgebaut sein, wobei die generelle Struktur als Stab (anstatt als Wicklung) erhalten bleibt.

Im Folgenden wird die Erfindung anhand der in den Figuren dargestellten Ausführungsbeispiele näher beschrieben und erläutert. Es zeigen schematisch:
Figur 1 einen Elektromotor mit auf von Kühlplatten getragenen Leiterplatten angeordneten Leistungsteilen in Schrägansicht,
Figur 2 auf einer Kühlplatte angeordnete Platinen in Frontansicht,
Figur 3 einen Ausschnitt des Elektromotors in Schrägansicht mit Kühlplatten mit Leiterplatten,
Figur 4 einen Ausschnitt des Elektromotors mit Kühlplatten mit Platinen und über Federkontakte angesteckten Verbindungsplatinen in Seitenansicht,
Figur 5 bis 7 eine Frontansicht des Elektromotors mit Kühlplatten mit Leiterplatten und Verbindungsplatinen,
Figur 8 ein Schnittbild einer Kühlplatte mit Leiterplatte, Treiberplatine und Verbindungsplatine.

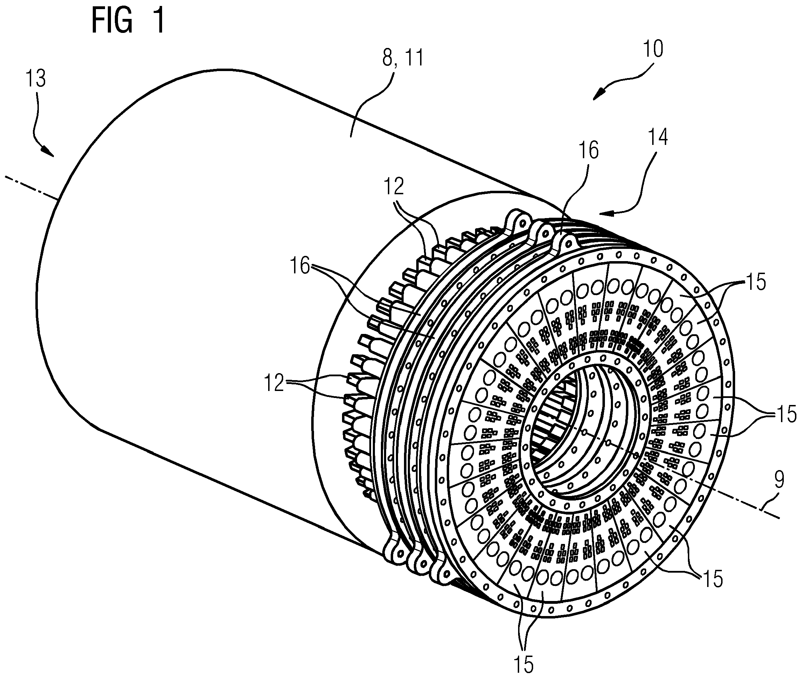

Figur 1 stellt eine isometrische Ansicht eines Elektromotors 10 dar, der ein Ausführungsbeispiel für die Erfindung ist. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem dem bestromten Stator 11 wird der Rotor um eine Achse 9 in Drehung versetzt. Der Rotor ist dabei vom Stator 11 durch einen Luftspalt getrennt. In anderen Ausführungsformen kann es sich bei dem Elektromotor 10 auch um einen Außenläufermotor oder Glockenankermotor handeln.

Der Stator 11 umfasst als Feldleiter eine Mehrzahl von starren und geraden Leiterstäben 12. Diese Leiterstäbe 12 sind auf der in Figur 1 abgewandten Stirnseite 13 über einen Kurzschlussring miteinander verbunden. Auf der Rückseite 14 des Elektromotors 10 werden die Leiterstäbe 12 durch jeweils zugehörige Wechselrichtermodule einzeln gespeist. Da es sich bedingt durch die Leiterstäbe 12 um einen bei niedrigen Spannungen betriebenen Elektromotor 10 handelt, können die Wechselrichtermodule zusammen mit anderen Komponenten der Elektronik (Gleichspannungswandler, Gleichrichter) verhältnismäßig eng zusammen auf Leiterplatten 15 angeordnet sein. Die Leiterplatten 15 sind dabei in diesem Beispiel ringsektorförmig und viele einzelne Leiterplatten 15 bilden zusammen eine ringförmige Platinenstruktur aus.

Während in den Beispielen davon ausgegangen wird, dass die Leiterplatten 15 zumindest die Leistungsteile von Wechselrichtern tragen, ist es auch möglich, dass ein Teil der Leiterplatten 15 Gleichrichter und DC/DC-Wandler tragen.

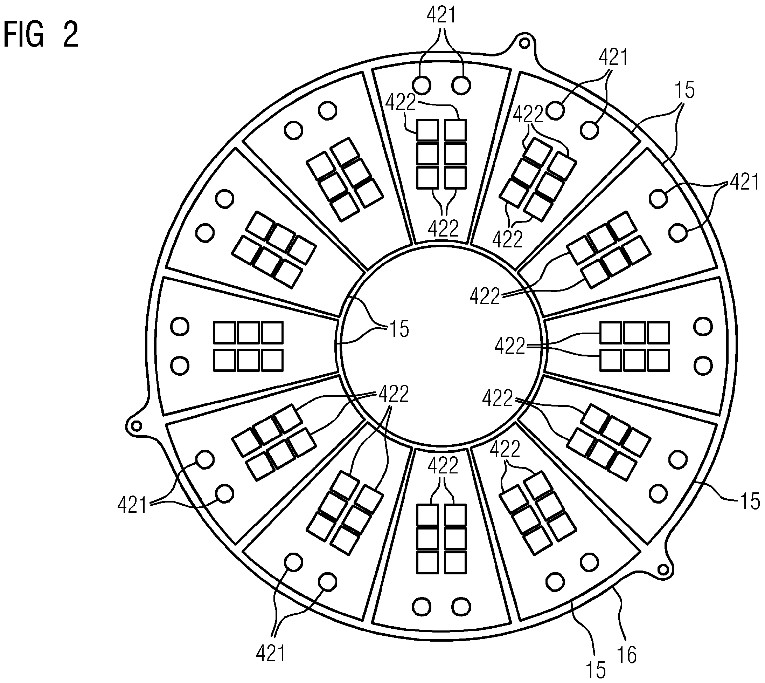

Figur 2 zeigt eine Aufsicht auf eine solche Platinenstruktur. Die Anzahl der in Figur 2 dargestellten Platinen ist dabei für eine bessere Übersichtlichkeit gegenüber dar Darstellung in Figur 1 verringert und stark vereinfacht dargestellt. Die konkrete Anzahl an solchen Leiterplatten 15 hängt von der konkreten Ausgestaltung des Elektromotors 10 ab, insbesondere der Anzahl der Leiterstäben 12. Jede der Leiterplatten 15 umfasst mehrere Halbleiterschalter 422. Die Halbleiterschalter 422 bilden zusammen Leistungsteile von Wechselrichtern aus, die eine Wechselspannung für die Leiterstäbe 12 bereitstellen.

Weiterhin kann ein Teil der Leiterplatten 15 oder alle Leiterplatten 15 in den Figuren nicht dargestellte Treiberschaltungen und andere elektronische Komponenten wie Kondensatoren umfassen. Die Halbleiterschalter 422 sind Leistungshalbleiter wie beispielsweise IGBTs, MOSFETs oder JFETs und können abhängig von der Verschaltung zusätzlich nicht gezeigte Dioden umfassen. Die Halbleiterschalter 422 sind beispielsweise als Halbbrücken verschaltet. Ein nicht gezeigter Kondensator kann beispielsweise einen Zwischenkreis-Kondensator der Halbbrücken darstellen. Die Halbleiterschalter 422 einer Leiterplatte 15 können dabei einer einzelnen Phase zugeordnet sein. Bei einem Elektromotor 10 mit einer großen Zahl an Feldleitern 12 und einer entsprechenden Zahl an Phasen ist es vorteilhaft, wenn eine Leiterplatte 15 die Leistungsteile für mehrere Phasen trägt.

Die Leiterplatten 15 umfassen weiterhin Kontaktstellen 421, an denen die Leiterstäbe 12 angeschlossen sind. Die Leiterplatten 15 werden von scheibenförmigen Kühlplatten 16 getragen, wobei für eine bessere Platzausnutzung die Kühlplatten 16 beidseitig mit Leiterplatten 15 belegt sein können.

Da bei dem Elektromotor 10 verhältnismäßig hohe Ströme in den Leiterstäben nötig sind, sind bevorzugt mehrere Leistungsteile zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente 18 zu den Leiterstäben 12 die Kühlplatten 16 und damit auch die Leiterplatten 15 gleichartig an den Kontaktstellen durchdringen oder im Falle der äußersten Kühlplatte 16 zumindest kontaktieren.

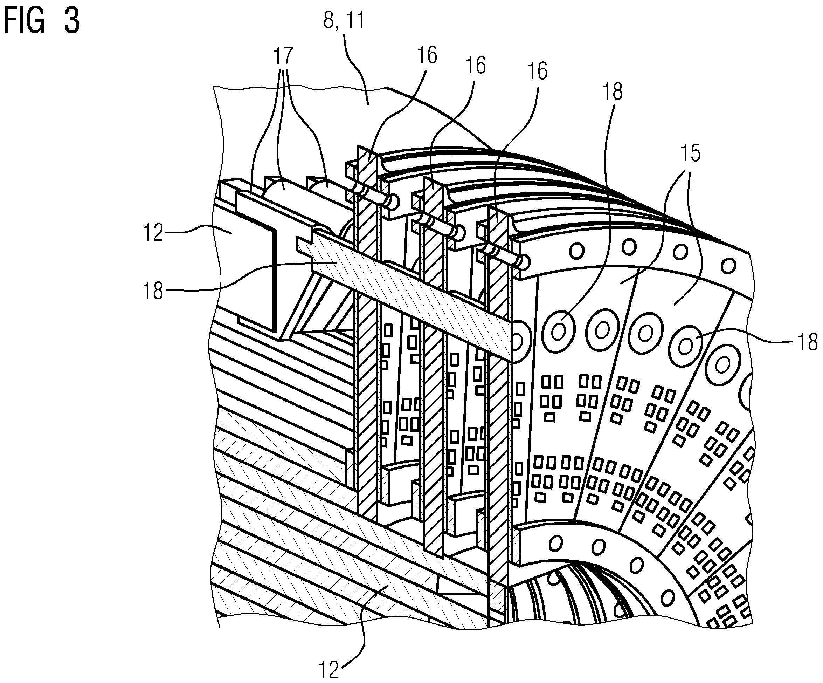

Figur 3 zeigt ein Schnittbild des Elektromotors 10 in Schrägansicht. Hierbei ist zu erkennen, dass die Verbindungselemente 18 die drei Kühlplatten 16 mechanisch tragen und durchdringen. Die Verbindungselemente 18 sind über Schuhe 17 mit den Leiterstäben 12 verbunden. Die Endstufen, die auf den Leiterplatten 15 in den Bereichen liegen, in denen eines der Verbindungselemente 18 eine Kühlplatte 16 durchdringt, sind parallelgeschaltet und stellen gemeinsam den Strom für den Leiterstab 12 bereit. Bei dem in Figur 3 gezeigten Aufbau ist erkennbar, dass zwei der Verbindungselemente 18 jeweils eine Platine 15 durchlaufen. Somit trägt jede der Platinen die Endstufen für zwei Phasen des Elektromotors 10. In anderen Varianten für den Elektromotor 10 kann eine einzelne Leiterplatte 15 auch nur eine Phase oder drei oder mehr Phasen tragen, wobei dieselbe Anzahl der Verbindungselemente 18 die Leiterplatte 15 durchläuft.

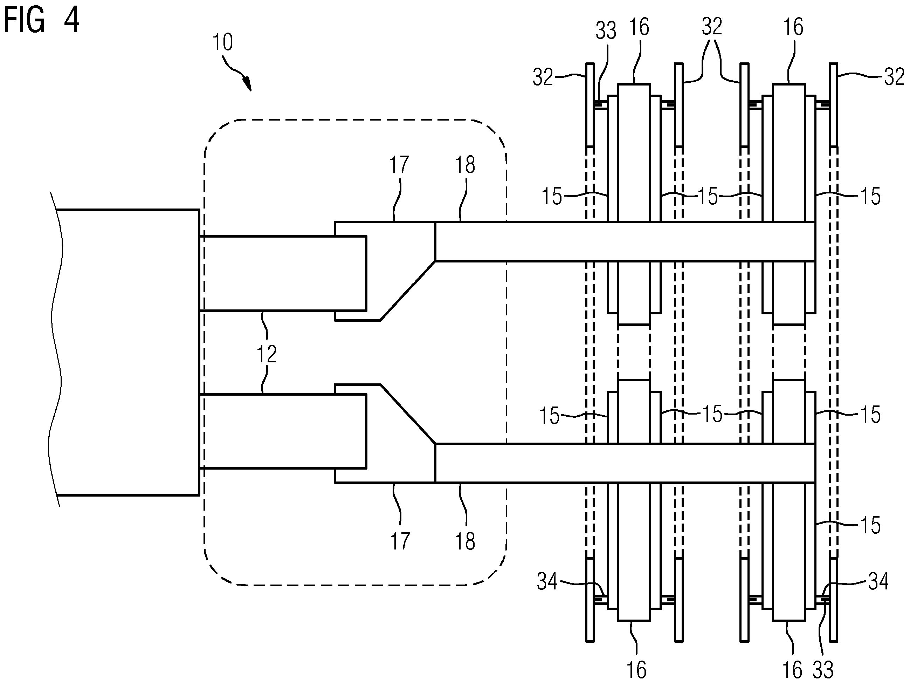

Figur 4 zeigt eine Seitenansicht eines Ausschnitts des Elektromotors 10. Gezeigt sind in Figur 4 acht Leiterplatten 15, die auf zwei Kühlplatten 16 angeordnet sind. Weiterhin zeigt Figur 4 vier Verbindungsplatinen 32, die jeweils zwei der Leiterplatten 15 verbinden. Die Verbindungsplatinen 32 sind parallel zu den Leiterplatten mittels Federkontakten 33 mit Buchsen 34 einer jeweiligen Leiterplatte 15 verbunden. Jede der Verbindungsplatinen 32 weist weiterhin eine Buchse 35 auf.

Die Buchse 35 ist für eine Kabelverbindung 36 mit der Steuerung vorgesehen. Sie kann die Signalleitungen parallel herausführen, beispielsweise als eine Buchsenleiste für einen direkten Platinen-Steckverbinder oder als Buchse für ein paralleles Schnittstellenkabel. Eine weitere Möglichkeit besteht darin, dass die Buchse 35 eine USB- oder LAN-(RJ45)-Buchse ist. Auch andere Verbindungstypen wie optische Verbindungen kommen in Frage. Die Verbindungsplatine 32, 61 kann auch nicht gezeigte elektronische Bauteile, beispielsweise für die Ansteuerung der Buchse 35 oder für eine anderweitige Signalaufbereitung, Signalverarbeitung oder Kommunikation aufweisen.

Die Anordnung in Figur 4 entspricht denjenigen der Figuren 1 bis 3. Von der Ringstruktur, die die Leiterplatten 15 bilden, erfasst das Schnittbild der Figur 4 daher genau acht Leiterplatten 15. Die in Figur 4 gezeigten Verbindungsplatinen 32 sind ringförmig und auch an die nicht gezeigten Leiterplatten 15 angesteckt.

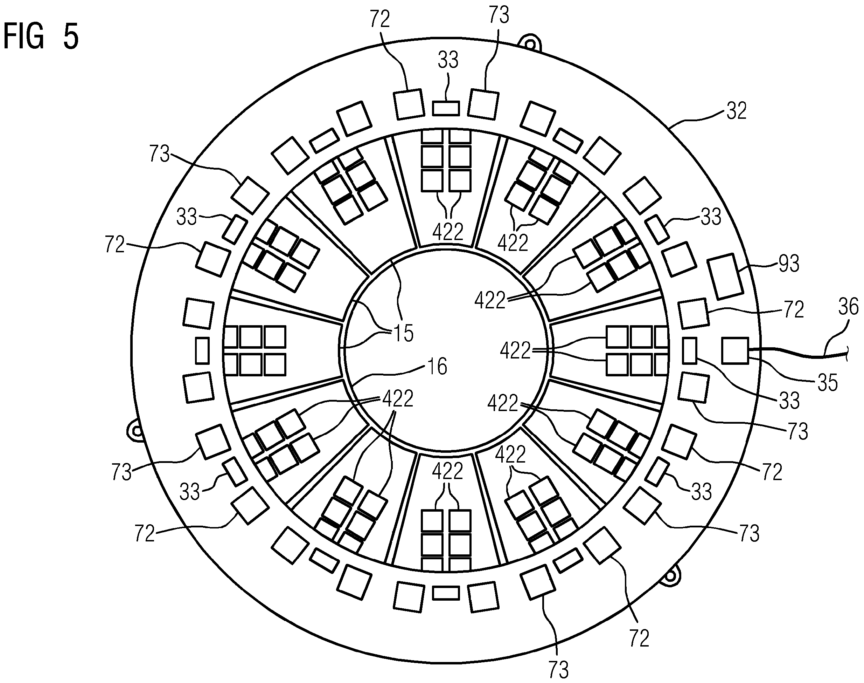

Figur 5 zeigt denselben Aufbau in einer Frontansicht. In Figur 5 ist erkennbar, dass die Leiterplatten 15 eine Ringstruktur ausbilden und dass die Verbindungsplatine 32 ringförmig ist. Gemäß Figur 5 sind zwölf Leiterplatten 15 auf der Vorderseite der Kühlplatte 16 angeordnet, bei beidseitiger Belegung der Kühlplatten 16 und Verwendung von zwei Kühlplatten wie in Figur 4 gezeigt, umfasst der Elektromotor 10 also 48 Leiterplatten 15, die mittels vier Verbindungsplatinen 32 mit einer Steuerplatine verbunden sind. Für diese Verbindung sind lediglich vier Kabelverbindungen 36 notwendig. In der Frontansicht der Figur 5 ist nur die Vorderseite einer Kühlplatte 16 und nur eine Verbindungsplatine 32 dargestellt, alle weiteren Elemente sind verdeckt.

Die Figuren zeigen vereinfachend einzelne Federkontakte 33 und Buchsen 34. In jedem Fall können damit aber jeweils auch mehrere tatsächliche Signalleitungen gemeint sein. Die Buchsen 34 können also tatsächlich Buchsenleisten sein und die Federkontakte 33 entsprechende Steckerleisten. Auch ist es unerheblich, welche Elemente Buchsen 34 oder Federkontakte 33 tragen, diese sind vertauschbar.

In dem Beispiel für eine ringförmige Verbindungsplatine 32 gemäß den Figuren 4 und 5 sind also alle Leiterplatten 15 einer ringförmigen Struktur mit der jeweiligen Verbindungsplatine 32 verbunden und über diese mit der Steuerung. Die Verbindungsplatine 32 weist in diesem Beispiel für jede der angeschlossenen Leiterplatten 15 eine Gate-Treiber-Schaltung 72 und einen lokalen Steuerchip 73 auf. Diese werden durch einen Multiplexer 93 mit den Signalen versorgt, die über die Kabelverbindung 36 empfangen werden. Weiterhin weist die Verbindungsplatine 32 elektrische Verbindungen zwischen den Elementen auf, die aber aus Gründen der Übersichtlichkeit nicht dargestellt sind.

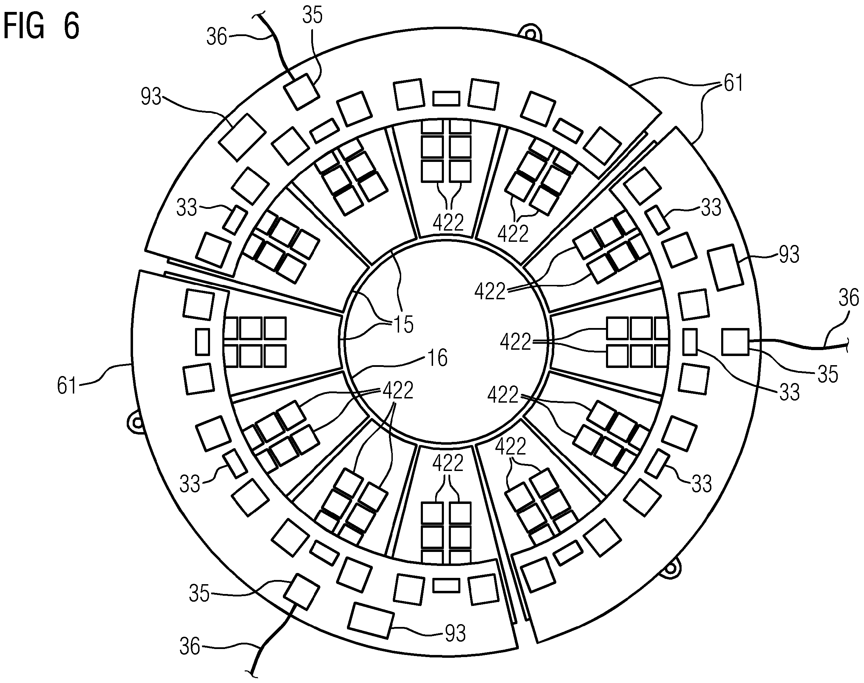

Figur 6 zeigt eine Frontansicht eines alternativen Ausführungsbeispiels. Wie in Figur 5 bilden die Leiterplatten 15 auch hier eine Ringstruktur aus. Im Gegensatz zu Figur 5 ist hier die Verbindungsplatine jedoch unterteilt in drei ringsektorförmige Verbindungsplatinen 61. Jede der ringsektorförmigen Verbindungsplatinen 61 umfasst eine Buchse 35 für eine Kabelverbindung 36 zur Steuerung und einen Multiplexer 93 zur Aufteilung der eintreffenden Signale. Ansonsten umfassen die ringsektorförmigen Verbindungsplatinen 61 diejenigen Gate-Treiber-Schaltungen 72 und lokalen Steuerchips 73, die den jeweils angebundenen Leiterplatten 15 zugeordnet sind. Die ringsektorförmigen Verbindungsplatinen 61 haben jeweils einen Mittelpunktswinkel von etwas weniger als 120°, machen also jeweils etwa einen Drittelkreis aus. So werden durch die Kombination dreier der ringsektorförmigen Verbindungsplatinen 61 wieder alle Leiterplatten 15 der ringförmigen Struktur angebunden an die Steuerung. Neben dem gezeigten Beispiel könnten die ringsektorförmigen Verbindungsplatinen 61 auch mit Mittelpunktswinkeln von 180° oder 90° ausgestaltet sein, wodurch dann die Leiterplatten 15 mittels zweier oder vier der Verbindungsplatinen 61 kontaktiert werden würden.

Mit drei ringsektorförmigen Verbindungsplatinen 61 mit jeweils einer eigenen Kabelverbindung 36 und zwei beidseitig belegten Kühlplatten ergeben sich insgesamt 12 Kabelverbindungen 36 zwischen den Verbindungsplatinen 61 und der Steuerung.

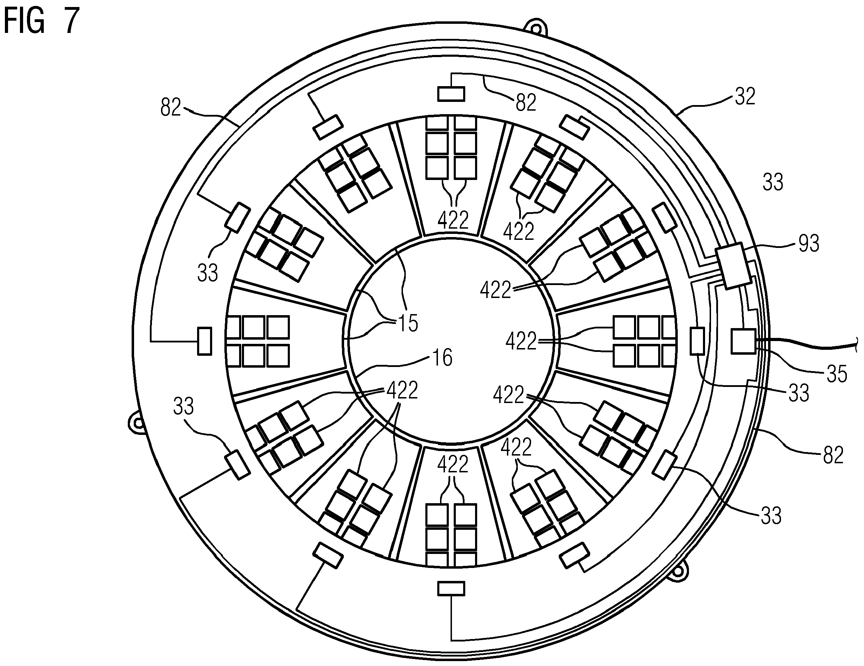

Eine weitere Ausführungsmöglichkeit ist in Figur 7 dargestellt. Die Verbindungsplatine 75 ist ringförmig, enthält aber nun im Gegensatz zu den voranstehenden Beispielen nicht die Gate-Treiber-Schaltungen 72 und lokalen Steuerchips 73, sondern nur noch die Buchse 35, den Multiplexer 93 und die Federkontakte 33 zu den Leiterplatten 15. Daneben kann die Verbindungsplatine 75 auch weitere elektronische Komponenten zur Signalaufbereitung, Signalverarbeitung Kommunikation aufweisen. Die Federkontakte 33 sind über Signalleitungen 82 an den Multiplexer 93 angebunden. Die Signalleitungen sind der Übersichtlichkeit halber als einfache Leitungen dargestellt, können aber jede einzelne mehrere getrennte elektrische Verbindungen umfassen. Die Verbindungsplatine 75 dient also als Signalverteiler. Die Gate-Treiber-Schaltungen 72 und lokalen Steuerchips 73 sind in diesem Ausführungsbeispiel auf den Leiterplatten 15 angeordnet (in Figur 7 nicht dargestellt).

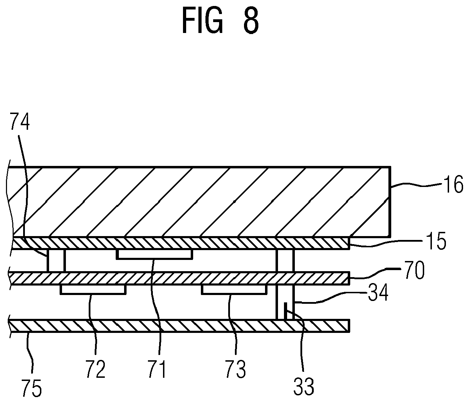

Neben der Möglichkeit, die Verbindungsplatinen 75 direkt an denjenigen Leiterplatten 15 anzustecken, die die Endstufen tragen, gibt es auch eine weitere Ausführungsform, die in Figur 8 in einer Schnittansicht dargestellt ist. Die auf einer Kühlplatte 16 angeordnete Leiterplatte 15 trägt dabei eine Endstufe des Wechselrichters, vereinfachend als ein Leistungshalbleiterschalter 71 dargestellt. Eine Treiber-Platine 70 trägt die Gate-Treiber-Schaltung 72 und einen lokalen Steuerchip 73. Steckverbinder 74 übertragen die Signale zwischen der Leiterplatte 15 und der Treiber-Platine 70. Der Federkontakt 33 ist in dieser Ausführungsform an der Treiber-Platine 70 angeordnet. Die Verbindungsplatine 75 wird also in dieser Ausführungsform auf die Treiber-Platine 70 aufgesteckt, wie gezeigt.

### Bezugszeichen

- 9: Motorachse
- 10: Elektromotor
- 11: Stator
- 12: Leiterstäbe
- 13: Stirnseite
- 14: Rückseite
- 15: Platine
- 16: Kühlplatte
- 17: Schuh
- 18: Verbindungselement
- 32, 61, 75: Verbindungsplatine
- 33: Federkontakt
- 34, 35: Buchse
- 36: Kabelverbindung
- 61: ringsektorförmige Verbindungsplatine
- 70: Treiber-Platine
- 71: Leistungshalbleiterchip
- 72: Gate-Treiber-Schaltung
- 73: lokaler Steuerchip
- 82: Signalleitung
- 93: Multiplexer
- 421: Kontaktstellen
- 422: Halbleiterschalter

## Patentansprüche

1. Elektromotor (10) mit:
- einem Stator (11) mit einer Mehrzahl von als Stab ausgestalteten Feldleitern (12),
- einem Wechselrichter mit einem oder mehreren parallelen Leistungsteilen für jeden der Feldleiter (12) zu deren Ansteuerung, wobei der Wechselrichter eine Steuerung zur Erzeugung von Ansteuersignalen für die Leistungsteile umfasst, wobei
- die Endstufen des Wechselrichters auf einer Mehrzahl von Leiterplatten (15) angeordnet sind,
- die Leiterplatten (15) so angeordnet sind, dass sie eine oder mehrere kreis- oder ringförmige Strukturen ausbilden,
- an jeder der Leiterplatten (15) ein oder mehrere Steckverbinder (33) angeordnet sind zur Kontaktierung der Endstufen,
- eine Verbindungsplatine (32, 61, 75) an die Steckverbinder (33) von wenigstens zwei der Leiterplatten (15) von einer der kreis- oder ringförmigen Strukturen angesteckt ist.

2. Elektromotor (10) nach Anspruch 1, bei dem die Verbindungsplatine (32, 61, 75) an die Steckverbinder (33) aller Leiterplatten (15) einer kreis- oder ringförmigen Struktur angesteckt ist.

3. Elektromotor (10) nach Anspruch 1 oder 2, bei dem die Verbindungsplatine (32, 61, 75) ringförmig ist oder ringsektorförmig ist.

4. Elektromotor (10) nach einem der vorangehenden Ansprüche, bei dem die Leiterplatten (15) zwei oder mehr kreis- oder ringförmigen Struktur ausbilden und für jede der kreis- oder ringförmigen Strukturen eine Verbindungsplatine (32, 61, 75) an die Steckverbinder (33) von wenigstens zwei Leiterplatten (15) jeder der kreis- oder ringförmigen Strukturen angesteckt ist.

5. Elektromotor (10) nach Anspruch 4, bei dem die kreis- oder ringförmigen Strukturen parallel zueinander und axial versetzt zueinander angeordnet sind, sodass ihre Mittelpunkte auf einer gemeinsamen Zentral-Achse liegen,

6. Elektromotor (10) nach Anspruch 5, bei dem die Achse der kreis- oder ringförmigen Strukturen der Motorachse (9) entspricht.

7. Elektromotor (10) nach einem der Ansprüche 4 bis 6, bei dem die kreis- oder ringförmigen Strukturen denselben Durchmesser aufweisen.

8. Elektromotor (10) nach einem der vorangehenden Ansprüche, bei dem die Verbindungsplatine (32, 61, 75) parallel zur angesteckten kreis- oder ringförmigen Struktur angeordnet ist.

9. Elektromotor (10) nach einem der vorangehenden Ansprüche, bei dem die Verbindungsplatine (32, 61, 75) Gate-Treiber-Schaltungen (72) für die Endstufen der angesteckten kreis- oder ringförmigen Struktur umfasst.

10. Elektromotor (10) nach einem der vorangehenden Ansprüche, bei dem die Verbindungsplatine (32, 61, 75) einen Multiplexer (93) umfasst und ausgestaltet ist, ein von der Steuerung eingehendes Steuersignal so auf eine von mehreren Signalleitungen zu leiten, dass es demjenigen Leistungsteil zugeleitet wird, dem das Steuersignal gilt.

11. Elektromotor (10) nach einem der vorangehenden Ansprüche, bei dem die Verbindungsplatine (32, 61, 75) eine oder mehrere Verschraubungen mit der kreis- oder ringförmigen Struktur umfasst.

12. Elektromotor (10) nach einem der vorangehenden Ansprüche, bei dem die Leiterplatten (15) auf wenigstens einer Kühlplatte (16) angeordnet sind und bei dem die Kühlplatte (16) so angeordnet ist, dass die Feldleiter (12) oder mit den Feldleitern (12) elektrisch verbundene Stromleiter (18) mit der Kühlplatte in mechanischer Wirkverbindung stehen, insbesondere als mechanischer Träger für die Kühlplatte (16) ausgebildet sind.

13. Elektromotor (10) nach einem der vorangehenden Ansprüche, bei dem die Leiterplatten (15) kreissektorförmig oder ringsektorförmig ausgestaltet sind.

14. Elektromotor (10) nach einem der vorangehenden Ansprüche, ausgestaltet, die Feldleiter (12) mit wenigstens 6 Phasen anzusteuern.

15. Elektromotor (10) nach einem der vorangehenden Ansprüche, bei dem die Wechselrichter ausgestaltet sind zur Erzeugung einer Wechselspannung mit einer Amplitude von 100 V oder weniger, insbesondere 50 V oder weniger, insbesondere 20 V oder weniger.
